# FASCICULE DE BREVET EUROPEEN

(11) **EP 0 651 863 B1**
(45) Date de publication et mention de la délivrance du brevet: **24.01.1996**
(21) Numéro de dépôt: 93914781.5
(22) Date de dépôt: 30.06.1993
(51) Int. Cl.: F16D 65/097

(54) **MONTAGE MECANIQUE A RESSORT DE MAINTIEN PRECONTRAINT**
MECHANISCHE VORRICHTUNG MIT VORGESPANNTER HALTEFEDER
MECHANICAL STRESSED-SPRING RETAINER ASSEMBLY

(30) Priorité: 28.07.1992 FR 9209279
(43) Date de publication de la demande: 10.05.1995
(73) Titulaire: ALLIEDSIGNAL EUROPE SERVICES TECHNIQUES, F-93700 Drancy (FR)
(72) Inventeur: HULLIGER, Claude, F-60520 Thiers-sur-Thève (FR); COUVEZ, Marc, F-93350 Le Bourget (FR)
(74) Mandataire: Bentz, Jean-Paul
(86) Numéro de dépôt international: FR9300656
(87) Numéro de publication internationale: WO9402752

(56) Documents cités:
- EP-B- 0 211 719
- DE-A- 3 313 680
- DE-A- 3 445 488
- DE-A- 3 929 748

## Description

La présente invention concerne un montage mécanique à maintien élastique, comprenant au moins des première et seconde pièces et un ressort constitué par un fil continu élastiquement flexible, sensiblement symétrique par rapport à un plan médian et comportant deux agrafes sensiblement symétriques par rapport audit plan médian et reliées entre elles par une portion médiane sensiblement perpendiculaire à ce même plan médian, ce ressort étant conformé pour présenter au moins des première et seconde zones d'appui dont la seconde comprend au moins une partie de la portion médiane et se trouve appliquée sur une seconde zone d'appui correspondante ménagée sur la seconde pièce, pour exercer entre les deux pièces une force d'écartement élastique.

Des montages de ce type sont courants dans de nombreux secteurs de l'industrie, notamment dans l'industrie automobile, et par exemple dans les dispositifs de freinage.

Dans ce domaine particulier d'application, qui représente la principale destination de l'invention, des ressorts sont utilisés pour maintenir, de manière élastique, des patins de frein à distance de la voûte concave d'un étrier de frein à disque.

Les difficultés de conception des ressorts utilisables dans de tels montages résident notamment dans la nécessité d'obtenir un accrochage fiable de ce ressort sur l'une des deux pièces à écarter, dans la nécessité d'éviter toute usure anormale de ces pièces, dans la nécessité éventuelle d'appliquer une force importante dans une direction définie, et dans la nécessité de réduire des coûts de fabrication.

De telles contraintes techniques et économiques étant antinomiques, il est souvent nécessaire, dans certaines applications, d'avoir recours à des ressorts en lame, seuls capables d'assurer correctement la fonction requise, mais au prix d'une augmentation importante des coûts.

Dans le document DE-A1-3 313 680, qui décrit un montage du type précité, le ressort doit être monté sur deux entretoises coplanaires maintenues dans des logements respectifs de l'étrier pour pouvoir repousser les patins à distance de ce dernier.

La présente invention vise à réduire ces compromis en proposant un montage utilisant un ressort-fil facile à fabriquer et à accrocher, et néanmoins capable d'assurer une fonction de maintien qui ne pouvait jusqu'à présent être assurée que par un ressort en lame ou par le recours à plusieurs composants.

A cette fin, le montage de l'invention, incorporant un tel ressort, est essentiellement caractérisé en ce que chaque agrafe comprend une branche libre et une branche liée raccordées entre elles par une zone de flexion pour offrir une résistance à un mouvement de rapprochement mutuel, en ce que les branches liées des deux agrafes sont sensiblement disposées dans un premier plan commun et raccordées à des portions intermédiaires respectives s'éloignant à la fois du premier plan commun et des branches libres des agrafes respectives, lesdites portions intermédiaires étant reliées entre elles par ladite portion médiane, en ce que les branches libres des deux agrafes sont sensiblement disposées dans un second plan commun, sont plus longues que les branches liées et convergent vers le plan médian, en ce que chaque branche libre est raccordée à une portion terminale sensiblement disposée dans le second plan commun et comprenant un premier segment s'éloignant du plan médian, un second segment se rapprochant de la zone de flexion et un troisième segment s'éloignant à nouveau du plan médian, et en ce que pour chaque agrafe les second et troisième segments d'une part, et la branche liée et la portion intermédiaire d'autre part, se raccordent en des points respectifs voisins l'un de l'autre ; ladite première zone d'appui du ressort comprenant au moins chaque premier segment et une partie au moins de chaque branche libre au voisinage de la zone de flexion et étant appliquée sur une première zone d'appui correspondante ménagée sur la première pièce.

Dans une des deux configurations stables possibles du ressort, le troisième segment de l'une au moins des deux agrafes est situé à l'intérieur d'un angle formé par la branche liée et la portion intermédiaire de cette agrafe.

Dans l'application privilégiée de l'invention, la première pièce consiste en un étrier coulissant d'un frein à disque, et la seconde pièce consiste en un patin de friction de ce frein.

Dans ce cas, le ressort maintient de préférence deux patins de friction disposés symétriquement par rapport au plan médian et l'étrier offre avantageusement une troisième zone d'appui pour le troisième segment de chaque agrafe, ce troisième segment exerçant sur cette troisième zone d'appui de l'étrier une force essentiellement opposée à celles que le premier segment et la branche libre de cette agrafe exercent sur la première zone d'appui de l'étrier.

D'autres caractéristiques et avantages de l'invention ressortiront clairement de la description qui en est faite ci-après, à titre indicatif et nullement limitatif, en référence au dessin annexé, dans lequel :
- La Figure 1 est une vue de dessus d'un frein à disque à étrier coulissant utilisant l'invention ;
- La Figure 2 est une vue en coupe schématique suivant la ligne II-II de la figure 1 ;
- La Figure 3 est une vue en perspective du ressort de l'invention, adoptant une première de ses deux configurations stables ;
- La Figure 4 est une vue en perspective du même ressort, placé dans la seconde de ses deux configurations stables possibles ;
- La Figure 5 est une vue de dessous du même ressort, dans sa première configuration ; et
- La Figure 6 est une vue du même ressort, prise suivant la flèche VI de la Figure 5.

L'invention sera décrite dans son domaine d'application privilégié, à savoir celui des freins à disque du type de ceux qui comprennent une chape 1, un étrier 2 équipé d'un moteur de frein 3 et monté coulissant sur la chape au moyen d'une colonnette 4, et des patins de friction 5 et 6 maintenus sur la chape de part et d'autre du disque (non représenté) de manière à pouvoir être rapprochés l'un de l'autre et mis en contact avec le disque par actionnement du moteur de frein 3 et coulissement de l'étrier.

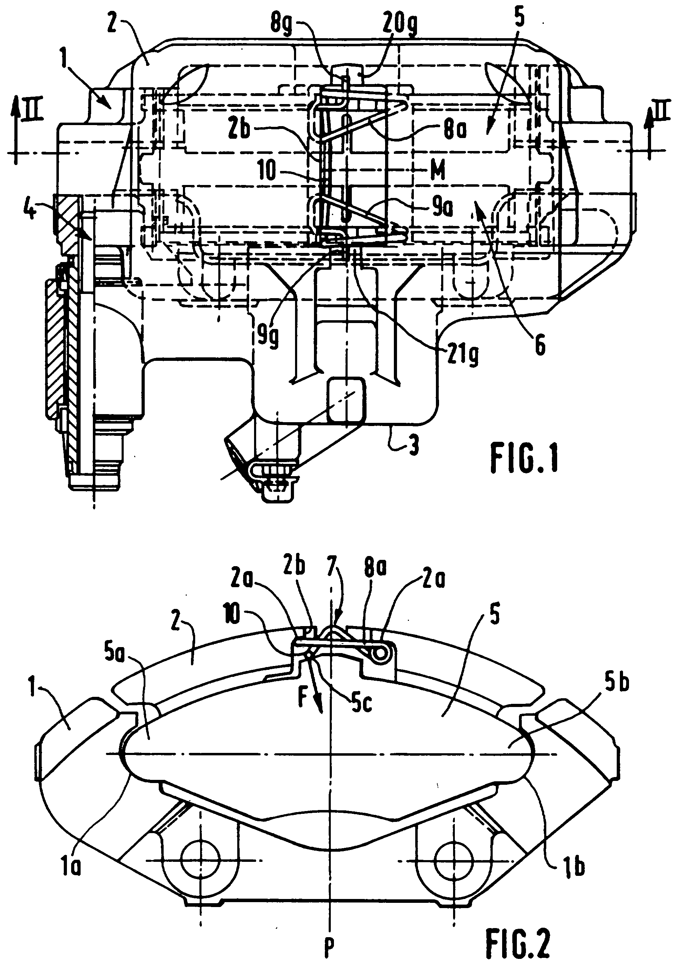

Comme le montre la Figure 2, chaque patin est par exemple muni d'oreilles semi-circulaires 5a, 5b guidées dans des logements semi-cylindriques 1a, 1b de la chape.

Un ressort 7, disposé entre l'étrier 2 et chacun des patins 5, 6, écarte élastiquement chaque patin de l'étrier de manière à éviter que les patins, la chape et l'étrier ne s'entrechoquent, et à obtenir un bon guidage des patins dans leur logement par l'application sur ces derniers d'une force F dirigée vers le centre du disque et de façon oblique par rapport au plan de symétrie P de l'ensemble, bien visible sur la Figure 2.

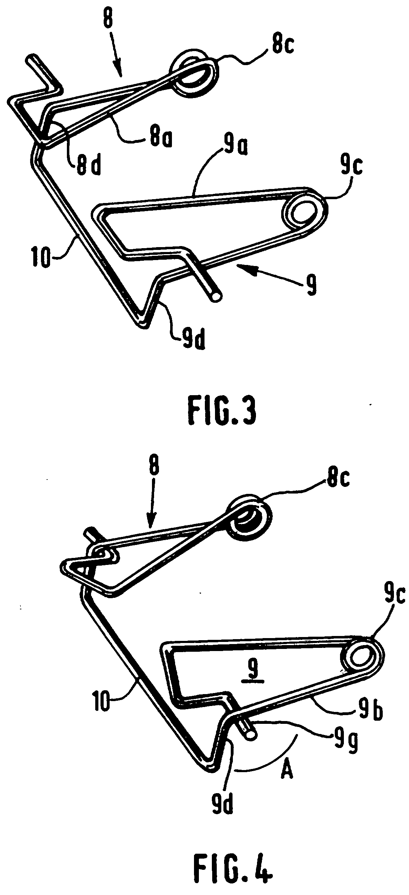

Le ressort 7, illustré en détail aux Figures 3 à 6, peut prendre une configuration de repos (Figures 3, 5 et 6), ou une configuration de précontrainte (Figures 1, 2, 4), cette dernière constituant la configuration dans laquelle le ressort 7 est normalement utilisé, ce ressort étant susceptible de passer une configuration à l'autre par simple déformation élastique.

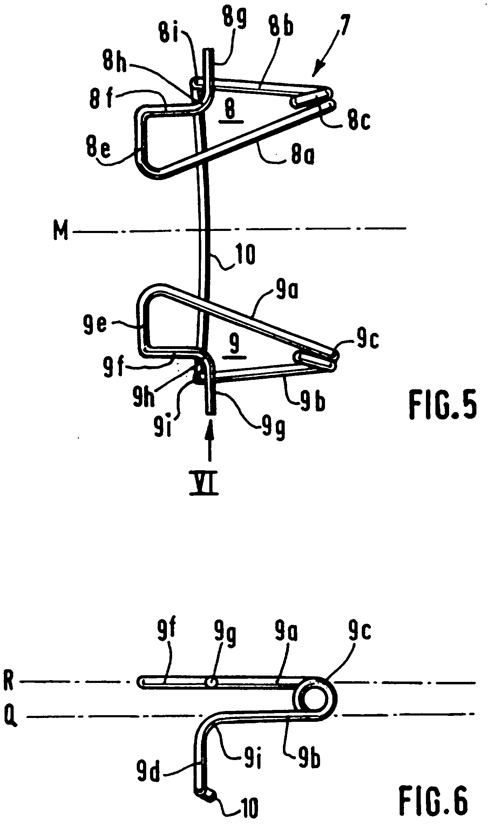

Le ressort 7 est constitué par un seul fil continu élastique en flexion et en torsion et adopte une forme sensiblement symétrique par rapport à un plan médian M (Figure 5).

Il comporte deux agrafes 8 et 9 comprenant chacune une branche libre 8a, 9a et une branche liée 8b, 9b.

Pour chaque agrafe, les branches libre et liée sont raccordées entre elles par une zone de flexion 8c, 9c qui procure à l'agrafe, même dans la configuration de repos, une résistance à tout mouvement de rapprochement des branches libre et liée.

Les branches liées 8b, 9b des deux agrafes sont sensiblement disposées dans un premier plan commun Q (Figure 6) et sont raccordées à des portions de fil intermédiaires respectives 8d, 9d.

Par ailleurs, ces portions intermédiaires 8d, 9d sont reliées entre elles par une portion de fil médiane 10 sensiblement perpendiculaire au plan médian M (Figure 5).

Les branches libres 8a, 9a sont elles-mêmes disposées dans un second plan commun R (Figure 6), sont plus longues que les branches liées (Figure 5) et convergent vers le plan médian M.

Les deux plans communs Q et R sont sensiblement parallèles l'un à l'autre dans la configuration de repos du ressort (Figure 6) et séparés par une distance non nulle mais inférieure au déplacement que peuvent subir les branches liées 8b, 9b en direction des branches libres par déformation élastique des agrafes 8 et 9.

Chaque branche libre 8a, 9a est raccordée à une portion terminale correspondante 8e, 8f, 8g et 9e, 9f, 9g sensiblement disposée dans le second plan commun R.

Chacune de ces portions terminales comprend successivement, à partir de la branche libre correspondante 8a, 9a : un premier segment 8e, 9e s'éloignant du plan médian M ; un second segment 8f, 9f se rapprochant de la zone de flexion correspondante 8c, 9c ; et un troisième segment 8g, 9g s'éloignant du plan médian M.

Pour chaque agrafe, les second et troisième segments d'une part, et la branche liée et la portion intermédiaire d'autre part, se raccordent en des points respectifs 8h, 8i et 9h, 9i voisins l'un de l'autre (Figures 5 et 6).

Comme il est dit précédemment, le ressort 7 peut présenter deux configurations stables (Figures 3 et 4) et peut passer de l'une à l'autre par simple déformation élastique.

Dans sa configuration d'utilisation normale (Figure 4), le ressort 7 est précontraint, le troisième segment 8g, 9g de chaque agrafe étant placé à l'intérieur de l'angle A (Figure 4) que forment la branche liée 8b, 9b et la portion intermédiaire 8d, 9d de cette agrafe.

Le ressort 7 ainsi constitué présente une première zone d'appui qui comprend au moins chaque premier segment 8e, 9e et une partie au moins de chaque branche libre 8a, 9a au voisinage de la zone de flexion correspondante 8c, 9c, et cette première zone d'appui est appliquée sur une première zone d'appui correspondante 2a ménagée à l'intérieur de la voûte concave que forme l'étrier 2 (voir Figures 1 et 2).

Le ressort 7 présente par ailleurs une seconde zone d'appui comprenant une partie au moins de la portion médiane 10, qui s'applique sur des zones d'appui correspondantes 5c ménagées sur des extensions radiales de patins de friction disposés symétriquement par rapport au plan médian M.

Comme le montrent les Figures 1 et 2, l'étrier 2 offre de préférence une troisième zone d'appui 20g, 21g pour le troisième segment 8g, 9g de chaque agrafe, ce troisième segment exerçant sur cette troisième zone d'appui de l'étrier une force dirigée vers le bas (par rapport à la Figure 2), c'est-à-dire de sens essentiellement opposé au sens des forces que le premier segment 8e, 9e et la branche libre 8a, 9a de chaque agrafe exercent sur la première zone d'appui 2a de l'étrier.

Comme le montrent les Figures 1 et 2, la mise en place du ressort 7 dans l'étrier 2 est rendue possible grâce à une lumière 2b dans laquelle ce ressort peut être inséré.

Le ressort 7, lorsqu'il est placé dans sa configuration de précontrainte, permet une mise en place aisée de patins de friction et évite tout endommagement des pièces fragiles du frein à disque qui pourrait résulter d'un débattement incontrôlé du ressort.

## Revendications

1. Montage mécanique à maintien élastique, comprenant au moins des première et seconde pièces (2, 5) et un ressort (7) constitué par un fil continu élastiquement flexible, sensiblement symétrique par rapport à un plan médian (M) et comportant deux agrafes (8, 9) sensiblement symétriques par rapport audit plan médian et reliées entre elles par une portion médiane (10) sensiblement perpendiculaire à ce même plan médian, ce ressort étant conformé pour présenter au moins des première et seconde zones d'appui dont la seconde comprend au moins une partie de la portion médiane et se trouve appliquée sur une seconde zone d'appui correspondante (2a, 5c) ménagée sur la seconde pièce, pour exercer entre les deux pièces une force d'écartement élastique, ce ressort étant caractérisé en ce que chaque agrafe comprend une branche libre (8a, 9a) et une branche liée (8b, 9b) raccordées entre elles par une zone de flexion (8c, 9c) pour offrir une résistance à un mouvement de rapprochement mutuel, en ce que les branches liées des deux agrafes sont sensiblement disposées dans un premier plan commun (Q) et raccordées à des portions intermédiaires respectives (8d, 9d) s'éloignant à la fois du premier plan commun et des branches libres des agrafes respectives, lesdites portions intermédiaires étant reliées entre elles par ladite portion médiane (10), en ce que les branches libres des deux agrafes sont sensiblement disposées dans un second plan commun (R), sont plus longues que les branches liées et convergent vers le plan médian, en ce que chaque branche libre est raccordée à une portion terminale sensiblement disposée dans le second plan commun et comprenant un premier segment (8e, 9e) s'éloignant du plan médian, un second segment (8f, 9f) se rapprochant de la zone de flexion et un troisième segment (8g, 9g) s'éloignant à nouveau du plan médian, et en ce que pour chaque agrafe les second et troisième segments d'une part, et la branche liée et la portion intermédiaire d'autre part, se raccordent en des points respectifs (8h, 8i ; 9h, 9i) voisins l'un de l'autre ; ladite première zone d'appui du ressort comprenant au moins chaque premier segment et une partie au moins de chaque branche libre au voisinage de la zone de flexion et étant appliquée sur une première zone d'appui correspondante ménagée sur la première pièce.

2. Montage suivant la revendication 1, caractérisé en ce que le troisième segment de l'une au moins de deux agrafes est situé à l'intérieur d'un angle formé par la branche liée et la portion intermédiaire de cette agrafe.

3. Montage suivant la revendication 2, caractérisé en ce que la première pièce consiste en un étrier coulissant d'un frein à disque, et en ce que la seconde pièce consiste en un patin de friction de ce frein.

4. Montage suivant la revendication 3, caractérisé en ce que le ressort maintient deux patins de friction (5, 6) disposés symétriquement par rapport audit plan médian.

5. Montage suivant la revendication 4, caractérisé en ce que l'étrier offre une troisième zone d'appui (20g, 21g) pour le troisième segment de chaque agrafe, ce troisième segment exerçant sur cette troisième zone d'appui de l'étrier une force essentiellement opposée à celles que le premier segment et la branche libre de cette agrafe exercent sur la première zone d'appui de l'étrier.

## Patentansprüche

1. Mechanischer Aufbau mit elastischer Haltewirkung, mit wenigstens einem ersten und einem zweiten Teil (2, 5) sowie einer aus einem elastisch flexiblen durchgehenden Draht gebildeten Feder (7), die im wesentlichen symmetrisch in bezug auf eine Mittelebene (M) ist und zwei im wesentlichen bezüglich der Mittelebene symmetrische und untereinander durch einen im wesentlichen senkrecht zu eben dieser Mittelebene verlaufenden Mittelteil (10) verbundene Klammern (8, 9) enthält, wobei diese Feder so ausgebildet ist, daß sie wenigstens einen ersten und einen zweiten Stützbereich aufweist, wobei letzterer wenigstens einen Teil des Mittelteiles umfaßt und an einem entsprechenden an dem zweiten Teil vorgesehenen zweiten Stützbereich (2a, 5c) anliegt, um zwischen den beiden Teilen eine elastische Spreizkraft auszuüben, wobei diese Feder dadurch gekennzeichnet ist, daß jede Klammer einen freien Schenkel (8a, 9a) sowie einen verbundenen Schenkel (8b, 9b) aufweist, die miteinander durch einen Biegebereich (8c, 9c) verbunden sind, um einer gegenseitigen Annäherungsbewegung einen Widerstand entgegenzusetzen, daß die verbundenen Schenkel der beiden Klammern im wesentlichen in einer gemeinsamen ersten Ebene (Q) angeordnet und mit jeweiligen sich gleichzeitig von der gemeinsamen ersten Ebene und von den freien Schenkeln der jeweiligen Klammern entfernenden Zwischenteilen (8d, 9d) verbunden sind, wobei die Zwischenteile miteinander durch den Mittelteil (10) verbunden sind, daß die freien Schenkel der beiden Klammern im wesentlichen in einer gemeinsamen zweiten Ebene (R) angeordnet, länger als die verbundenen Schenkel sind und sich der Mittelebene nähern, daß jeder freie Schenkel mit einem im wesentlichen in der gemeinsamen zweiten Ebene angeordneten Endteil verbunden ist, der einen sich von der Mittelebene entfernenden ersten Abschnitt (8e, 9e), einen sich dem Biegebereich nähernden zweiten Abschnitt (8f, 9f) sowie einen sich wiederum von der Mittelebene entfernenden dritten Abschnitt (8g, 9g) enthält, und daß bei jeder Klammer einerseits der zweite und der dritte Abschnitt und andererseits der verbundene Schenkel und der Zwischenteil in jeweiligen benachbarten Punkten (8h, 8i; 9h, 9i) zusammengefügt sind; wobei der erste Stützbereich der Feder wenigstens jeden ersten Abschnitt und wenigstens einen Teil jedes freien Schenkels in der Nähe des Biegebereichs enthält und an einem an dem ersten Teil vorgesehenen entsprechenden ersten Stützbereich anliegt.

2. Aufbau nach Anspruch 1, dadurch gekennzeichnet, daß der dritte Abschnitt von wenigsten einer der beiden Klammern innerhalb eines durch den verbundenen Schenkel und den Zwischenteil dieser Klammer gebildeten Winkels angeordnet ist.

3. Aufbau nach Anspruch 2, dadurch gekennzeichnet, daß das erste Teil aus einem Schiebesattel einer Scheibenbremse und daß das zweite Teil aus einem Reibschuh dieser Bremse besteht.

4. Aufbau nach Anspruch 3, dadurch gekennzeichnet, daß die Feder zwei symmetrisch in bezug auf die Mittelebene angeordnete Reibschuhe (5, 6) hält.

5. Aufbau nach Anspruch 4, dadurch gekennzeichnet, daß der Sattel für den dritten Abschnitt jeder Klammer einen dritten Stützbereich (20g, 21g) bietet, wobei dieser dritte Abschnitt auf diesen dritten Stützbereich des Sattels eine Kraft ausübt, die zu den Kräften, die von dem ersten Abschnitt und dem freien Schenkel dieser Klammer auf den ersten Stützbereich des Sattels ausgeübt werden, im wesentlichen entgegengesetzt ist.

## Claims

1. Mechanical elastic retaining assembly comprising at least first and second members (2, 5) and a spring (7) consisting of a continuous elastically flexible wire which is substantially symmetrical in relation to a center plane (M) and which comprises two clips (8, 9) which are substantially symmetrical in relation to said center plane and connected together by a central portion (10) substantially at right angles to this same center plane, this spring being shaped to exhibit at least first and second support zones, the second of which comprises at least a part of the central portion and is applied against a corresponding second support zone (2a, 5c) provided on second member to exert an elastic spacing force between the two members, this spring being characterized in that each clip comprises a free branch (8a, 9a) and a joined branch (8b, 9b), said branches being connected together by a flexion zone (8c, 9c) for offering resistance to a movement bringing them closer to one another, in that the joined branches of the two clips are substantially disposed in a first common plane (Q) and connected to respective intermediate portions (8d, 9d) extending away from both the first common plane and the free branches of the respective clips, said intermediate portions being connected together by said central portion (10), in that the free branches of the two clips are substantially disposed in a second common plane (R), are longer than the joined branches and converge toward the center plane, in that each free branch is connected to an end portion substantially disposed in the second common plane and comprising a first segment (8e, 9e) extending away from the center plane, a second segment (8f, 9f) extending toward the flexion zone and a third segment (8g, 9g) once again extending away from the center plane, and in that for each clip the second and third segments, on the one hand, and the joined branch and the intermediate portion, on the other hand, are connected together at respective points (8h, 8i; 9h, 9i) close to one another; said first support zone of the spring comprising at least each first segment and at least a part of each free branch close to the flexion zone and being applied against a corresponding first support zone provided on the first member.

2. Assembly according to Claim 1, characterized in that the third segment of at least one of two clips is situated inside an angle formed by the joined branch and the intermediate portion of said clip.

3. Assembly according to Claim 2, characterized in that the first member consists of a sliding caliper of a disk-brake, and in that the second member consists of a friction pad of said brake.

4. Assembly according to Claim 3, characterized in that the spring retains two friction pads (5, 6) disposed symmetrically in relation to said center plane.

5. Assembly according to Claim 4, characterized in that the caliper has a third support zone (20g, 21g) for the third segment of each clip, said third segment exerting on said third support zone of the caliper a force essentially opposite to the forces exerted by the first segment and the free branch of said clip on the first support zone of the caliper.
